# EUROPEAN PATENT SPECIFICATION

(11) **EP 2 341 513 B1**
(45) Date of publication and mention of the grant of the patent: **04.01.2017**
(21) Application number: 09815548.4
(22) Date of filing: 09.06.2009
(51) Int. Cl.: H01F 27/06

(54) **SUPPORTING METHOD AND SUPPORTING STRUCTURE OF REACTOR**
UNTERSTÜTZUNGSVERFAHREN UND UNTERSTÜTZUNGSSTRUKTUR EINES REAKTORS
PROCÉDÉ ET STRUCTURE DE SOUTIEN DE RÉACTEUR

(30) Priority: 28.09.2008 CN 200810168841
(43) Date of publication of application: 06.07.2011
(73) Proprietor: Tbea Hengyang Transformers Co., Ltd., Hunan 421007 (CN)
(72) Inventor: TIAN, Qiang, Hunan 421007 (CN); TAN, Wenli, Hunan 421007 (CN)
(74) Representative: Cohausz & Florack
(86) International application number: PCT/CN2009/000635
(87) International publication number: WO 2010/034178

(56) References cited:
- WO-A1-2008/080820
- WO-A1-2008/080820
- CN-A- 1 033 426
- CN-A- 101 106 010
- CN-Y- 201 117 411
- CN-Y- 201 117 411
- FR-A- 1 407 030
- JP-A- S5 713 723
- JP-A- S5 740 907
- JP-A- S5 740 908
- JP-A- S5 740 909
- US-A- 2 270 902
- US-A- 3 260 974
- US-A- 3 374 453
- US-A- 3 684 991
- US-A- 4 101 704

## Description

### TECHNICAL FIELD

The present invention belongs to a technical field of reactor, and relates to a method for increasing a contact area between a bottom plate of a reactor body and a base platform and an apparatus comprising a bottom plate of a reactor body and a base platform.

The method is particularly adapted to reactor products with voltage of 500kV and above and reactors having larger capacity.

### BACKGROUND ART

The structure and operation characteristic of a reactor determine an inevitable vibration in the use of it. The reduction of vibration of a reactor requires an integral structure of the base platform which supports the reactor body, and the bottom plate of the reactor body is sufficiently adhered to the base platform. The base platform is usually made of reinforced concrete, and although levelness and flatness are guaranteed to the greatest extent in construction, owing to contractibility of the cement when being solidified and dried it is hard to obtain ideal levelness and flatness of a surface of the base platform. On the other hand, slotted steels for reinforcing strength of a bottom of a reactor tank are welded to a bottom surface of the reactor tank (the contact between the reactor body and the base platform is actually the contact between the slotted steel at the bottom of the reactor tank and the base platform), and since the slotted steel is a welded assembly, it is also hard to obtain ideal levelness and flatness on a lower surface of the slotted steel. Owing to the above two reasons, the bottom plate of the reactor body inevitably fails to be completely adhered to the surface of the base platform in construction, thereby the vibration of the reactor is intensified, the reasons of which are as follows: firstly, since the bottom plate of the reactor body fails to be completely adhered to the base platform, the contact area therebeween is reduced, and the deadweight and electromagnetic surging force of the reactor act on a relatively small area of the surface of the base platform, therefore the threshold of elastic deformation of the base platform is enlarged; secondly, due to effects of the weight and electromagnetic surging force of the reactor, elastic deformation of the reactor tank, particularly that of the bottom of the reactor tank is increased, which causes a stronger vibration; thirdly, a lower reactor tank is originally a rigid body, since the slotted steel at the bottom of the reactor tank is not well adhered to the base platform then, causing a large range of the bottom of the tank to suspend, the reactor tank increasingly vibrates as a spring. The tank plate fails to sufficiently contact with the surface of the base platform, which causes increased deformation and vibration of the tank.

Reactors with voltage equal to or more than 750kV have larger capacity and therefore stronger magnetic force, so, even if a gap between the base platform and the bottom plate of the reactor body is quite small, the reactor will be greatly affected to cause a bigger deformation of the bottom of the reactor tank. FR 1 407 030 A discloses an apparatus comprising a bottom plate of a reactor body and a base platform and a bonding layer disposed between the bottom plate of a reactor body and the base platform.

### SUMMARY OF THE INVENTION

Owing to the above disadvantages in the prior art, the object of the present invention is to provide a method for increasing a contact area between a bottom plate of a reactor body and a base platform according to claim 1 and an apparatus according to claim 7. The method and the contact structure of the apparatus enable the bottom plate of the reactor body to sufficiently contact with a surface of the base platform to reduce vibration.

According to the present invention there is provided a method for increasing a contact area between a bottom plate of a reactor body and a base platform according to independent claim 1 and an apparatus comprising a bottom plate of a reactor body and a base platform according to independent claim 7. Preferred features are specified in dependent claims 2-6.

The advantages of filling epoxy resin into a gap between the bottom plate of the reactor body and the surface of the base platform are as follows: firstly, the contact area between the bottom plate of the reactor body and the base platform is increased, therefore the vibration of the bottom plate of the reactor body and the base platform is greatly reduced, and the elastic deformation of the bottom plate of the reactor body and the base platform is reduced; secondly, rain water is prevented from entering into a contact portion of the bottom plate of the reactor body and the base platform, and thereby avoid rust formation of the bottom plate of the reactor body; thirdly, filler marks around the base platform serve as reference objects for measuring levelness on the surface of the base platform.

### BRIEF DESCRIPTION OF THE DRAWINGS

FIG. 1 is a structural diagram of the bottom plate of the reactor body and the base platform;
FIG. 2 is a sectional view taken from the line A-A of FIG.1;
   wherein: 1 - outer frame line; 2 - aligning frame; 3 - jack; 4 - base platform; 5 - foundation bolt; 6 - reinforcing plate; 7 - bonding layer; 8 - plastic fabric; 9 - wedge-shaped iron plate; 10 - reactor tank; 11 - A line; 12 - slotted steel; 13 - embedded steel plate of base platform.

### DETAILED DESCRIPTION OF THE INVENTION

The present invention will be described below in detail with reference to embodiments and drawings.

The following embodiments of the present invention are not intended to be restrictive.

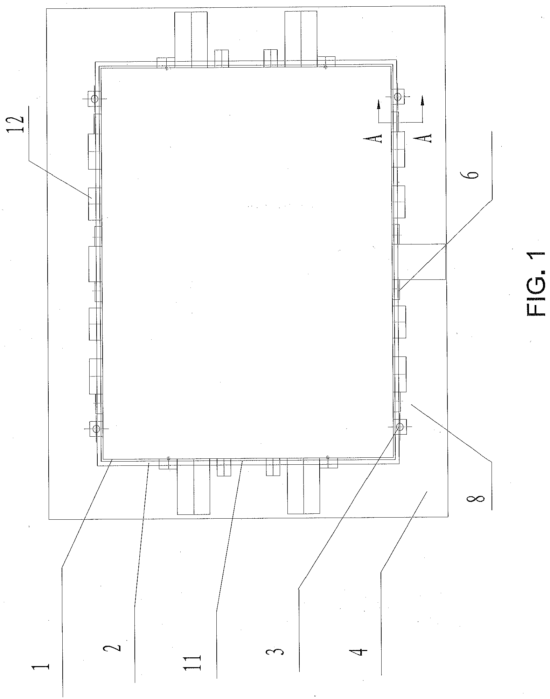

As shown in FIG. 1, a reactor body is positioned on a base platform 4. As manufacturing errors are unavoidable between the base platform 4 and a bottom plate of the reactor body, there will be a gap between them. So, the base platform 4 and the bottom plate of the reactor body are unable to be completely adhered to each other, which intensifies vibration of the reactor.

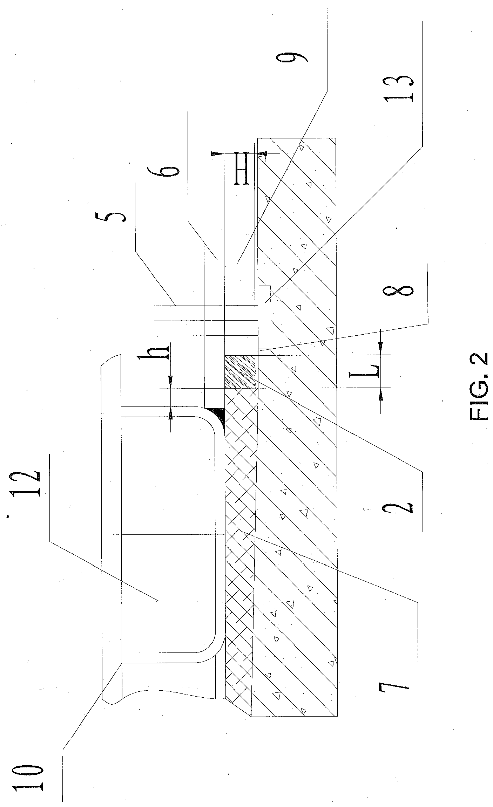

As shown in FIG. 2, in this embodiment, the bottom plate of the reactor body is a bottom of a reactor tank 10. A plurality of slotted steels 12 arranged crosswise in lateral and longitudinal directions are positioned at the bottom of the reactor tank 10 to enhance strength of the bottom of the reactor tank, the slotted steels 12 are welded to the bottom of the reactor tank, and a bonding layer 7 is filled into the gap between the slotted steels 12 and a surface of the base platform 4. Since the bonding layer 7 is sufficiently adhered to a lower surface of the slotted steel 12 and the surface of the base platform 4, the base platform 4 is integrated with the bottom plate of the reactor body.

In this embodiment, the bonding layer 7 is formed by epoxy resin, the slotted steels 12 are made of steel materials, and the base platform 4 is made of reinforced concrete.

The epoxy resin is well bonded with both the base platform 4 and the slotted steels 12 at the bottom of the reactor tank. Moreover, an ultimate strength and elastic modulus of the steel materials are respectively 50Kgf/mm² and 200,000MPa, an ultimate strength and elastic modulus of the concrete are respectively 10 Kgf/mm² and 30,000MPa, and an ultimate strength and elastic modulus of the epoxy resin are respectively 10-20Kgf/mm² and 10,000MPa. That is to say, the ultimate strength of the epoxy resin is between those of the steel materials and reinforced concrete, and its elastic modulus is less than those of them. The three materials of different strengths support the reactor together in up and down directions. Since they have different inherent frequencies, damping vibration performance of the base platform 4 is improved, structural damping of the bottom of the reactor tank 10 is increased, and vibration amplitude of the reactor itself is attenuated according to geometrical series, which greatly benefits to the damping vibration. Therefore, on the base platform 4, the epoxy resin is selected to serve as binding agent between the base platform 4 and the bottom of the reactor tank 10.

The epoxy resin filled between the base platform 4 and the slotted steels 12 at the bottom of the tank guarantees that they are completely adhered to each other after solidification of the epoxy resin, and bonding force also ensures that a jack easily lifts up the reactor during repairation. The bonding force is controlled by controlling volume of the epoxy resin.

The filling process in detail is as follows:
1) drawing a rectangular frame line called an A line 11 which is 5mm away from an outer frame line of the bottom of the reactor tank outside of the outer frame line on the base platform by taking the outer frame line 1 as a reference, then making an aligning frame 2 having a shape of rectangular frame by using the A line 11 as an introcontrol size of the aligning frame. A plastic fabric 8 is positioned under the aligning frame 2 in order to remove the overflowing epoxy resin easily, and part of the plastic fabric 8 extending out of the aligning frame 2 has a width of about 100 mm.
2) lifting up the reactor tank 10 positioned on the base platform 4 by a jack 3;
3) filling epoxy resin into the aligning frame 2 up to a height of the aligning frame 2;
4) then waiting for 4-6 hours to release pressure of the jack 3 when the epoxy resin is in a semi-solid state, the reactor tank 10 slowly falls down, till the slotted steels 12 welded to the bottom of the reactor tank 10 contact with the epoxy resin filled into the aligning frame 2, and the extra epoxy resin overflows from the aligning frame 2 under pressure of the reactor tank 10;
5) cleaning up the epoxy resin overflowing from the aligning frame 2 by a blade when overflowing stops, then cutting out the plastic fabric extending out of the aligning frame 2 to keep a neat and aesthetic appearance of a periphery of the base platform 4.

In this embodiment, the aligning frame 2 is made of pine blocks having a width L of 14mm and a height H of 15mm. In fact, the height H of the aligning frame 2 depends on a suspending height between the slotted steels 12 at the bottom of the reactor tank and the base platform 4 and volume of the epoxy resin with which the reactor can be lifted up by the jack. The volume of the epoxy resin layer is controlled by controlling the height H of the aligning frame 2 so as to control the bonding force (the bonding force is in proportion to volume of the bonding layer), thereby the bonding force and deadweight of the reactor body are within a range of application of the jack.

Before filling the epoxy resin, a curing agent is added to the epoxy resin to accelerate solidification of the epoxy resin, and organic synthetic materials such as estolide can be adopted as the curing agent. A weight ratio of the epoxy resin to the curing agent is 5.4:1. Fluid grit of appropriate amount is added in the epoxy resin as wanted to increase viscosity. Colors of the epoxy resin can be adjusted according to requirements of clients, and a grey color close to cement is preferably selected.

In this embodiment, the epoxy rein filled between the base platform 4 and the slotted steels 12 at the bottom of the reactor tank 10 keeps the two completely adhered to each other after solidification without producing a too strong bonding force. Because the reactor needs to be lifted up again during repairation, the bonding force between the epoxy resin and the slotted steels 12 at the bottom of the reactor tank and the weight of the reactor cannot exceed the maximum lifting force of the jack. Moreover, the bonding force between the epoxy resin and the slotted steels 12 at the bottom of the reactor tank is smaller than the bonding force between the epoxy resin and the base platform 4; thereby the epoxy resin will not be bonded on the slotted steels 12 when the reactor is lifted by the jack 3.

In this embodiment, a reinforcing plate 6 is welded to a bottom of the slotted steels 12 at the bottom of the reactor tank to prevent the reactor tank 10 from moving on the base platform 4. A plurality of reinforcing plates 6 is positioned around the bottom of the reactor tank, and the reinforcing plates 6 are preformed with holes through which foundation bolts 5 preset on the base platform 4 pass. After positioning the reactor on the base platform 4, the foundation bolts 5 pass through the holes on the reinforcing plates 6, and screw nuts are fastened to the foundation bolts 5, thereby the reactor tank 10 can be better fixed on the base platform 4. Since the reinforcing plate 6 has a length larger than that of the aligning frame 2, a wedge-shaped iron plate 9 for supporting is inserted outside the aligning frame 2 and under the reinforcing plate 6 to better support the reinforcing plate 6.

## Claims

1. A method for increasing a contact area between a bottom plate of a reactor body and a base platform (4), steps of which comprising: filling a bonding layer (7) between the bottom plate of the reactor body and the base platform (4), so that the bonding layer (7) is respectively bonded with them, wherein filling the bonding layer (7) between the bottom plate of the reactor body and the base platform (4) comprises the following steps:
1) lifting the reactor body positioned on the base platform (4),
2) manufacturing an aligning frame (2) and positioning it between the bottom plate of the reactor body and the base platform (4),
3) filling binding agent into the aligning frame (2) to form a bonding layer(7), wherein the binding agent represents epoxy resin, wherein a curing agent is added in the epoxy resin filled therein, a weight ratio of the epoxy resin to the curing agent is 5.4:1, and fluid grit is further added in the epoxy resin, and
4) making the bottom plate of the reactor body fall back on the base platform (4) when the binding agent is in a semi-solid state, wherein 4-6 hours are required for the epoxy resin to become semi-solid;
wherein the binding agent has an elastic modulus lower than those of the material of the bottom plate of the reactor body and the material of the base platform (4); the bottom plate of the reactor body is made of steel material, and the base platform is made of reinforced concrete;
the epoxy resin filled between the base platform (4) and the bottom plate of the reactor body completely adheres them to each other after solidification of the epoxy resin, and the base platform (4) is integrated with the bottom plate of the reactor body; and
wherein in step 1), the reactor body positioned on the base platform is lifted up by a jack (3); and in step 4), the bottom plate of the reactor body falls back on the base platform (4) by releasing pressure of the jack (3).

2. The method according to claim 1, **characterized in that**, in step 2), the aligning frame (2) is disposed at certain width from an outer frame line (1) of the bottom plate of the reactor body which is manufactured by taking the outer frame line (1) as a reference.

3. The method according to claim 2, **characterized in that**, the outer frame line (1) of the bottom plate of the reactor body is inside the manufactured aligning frame (2), and a distance h between the outer frame line (1) of the bottom plate of the reactor body and the aligning frame (2) ranges from 2mm to 8mm.

4. The method according to claim 1, **characterized in that**, the aligning frame (2) is a wooden rectangle frame, and frame bars of the rectangular frame have a width L ranging from 10mm to 15mm and a height H ranging from 12mm to 18mm.

5. The method according to claim 1, **characterized in that**, in step 2), a plastic fabric (8) is positioned under the aligning frame (2), and part of the plastic fabric (8) extending out of the aligning frame (2) has a length ranging from 50mm to 100mm; and the step 4) is followed by a step 5): 5) cleaning up the binding agent overflowing from the aligning frame (2), and cutting out the plastic fabric (8) extending out of the aligning frame (2).

6. The method according to any one of claims 1-5, **characterized in that**, the bottom plate of the reactor body is a bottom of a reactor tank (10), slotted steels (12) are fixed on the bottom of the reactor tank (10), and the bonding layer (7) is provided between a lower surface of the slotted steels (12) and the base platform (4).

7. An apparatus comprising a bottom plate of a reactor body and a base platform (4), an aligning frame (2) positioned between the bottom plate of the reactor and the base platform (4), the apparatus further comprising a contact structure between the bottom plate of the reactor body and the base platform (4), the contract structure comprising a bonding layer (7) provided between the bottom plate of the reactor body and the base platform (4), wherein the bonding layer (7) is bonded with the bottom plate of the reactor body and the base platform (4) respectively; **characterized in that** the bonding layer (7) is formed by a binding agent, a curing agent, and a fluid grit filled in the aligning frame (2), wherein the binding agent is epoxy resin, and the binding agent has an elastic modulus lower than those of the material of the bottom plate of the reactor body and the material of the base platform (4); a weight ratio of the epoxy resin to the curing agent is 5.4:1; the base platform (4) and the bottom plate of the reactor body are completely adhered to each other by the epoxy resin filled between the base platform (4) and the bottom plate of the reactor body, and the base platform(4) is integral with the bottom plate of the reactor body.

8. The apparatus according to claim 7, **characterized in that**, the bottom plate of the reactor body is a bottom of a reactor tank (10), slotted steels (12) are fixed on the bottom of the reactor tank (10), and the bonding layer (7) is provided between a lower surface of the slotted steels (12) and the base platform (4).

## Patentansprüche

1. Verfahren zum Erhöhen einer Kontaktfläche zwischen einer Bodenplatte eines Reaktorkörpers und einer Basisplattform (4), umfassend die folgenden Schritte: Füllen einer Verbindungsschicht (7) zwischen der Bodenplatte des Reaktorkörpers und der Basisplattform (4), sodass die Verbindungsschicht (7) jeweils damit verbunden wird, wobei das Füllen der Verbindungsschicht (7) zwischen der Bodenplatte des Reaktorkörpers und der Basisplattform (4) die folgenden Schritte umfasst:
1) Anheben des Reaktorkörpers, der auf der Basisplattform (4) angeordnet ist,
2) Herstellen eines Ausrichtungsrahmens (2) und Anordnen dieses zwischen der Bodenplatte des Reaktorkörpers und der Basisplattform (4),
3) Füllen eines Bindemittels in den Ausrichtungsrahmen (2), um eine Verbindungsschicht (7) zu bilden, wobei das Bindemittel Epoxidharz repräsentiert, wobei ein Härtungsmittel zu dem darin eingefüllten Epoxidharz gegeben wird, wobei ein Gewichtsverhältnis des Epoxidharzes zu dem Härtungsmittel 5,4:1 beträgt und wobei ferner Fluid-Korn in das Epoxidharz zugegeben wird, und
4) Veranlassen, dass die Bodenplatte des Reaktorkörpers zurück auf die Basisplattform (4) fällt, wenn sich das Bindemittel in einem halbfesten Zustand befindet, wobei 4 bis 6 Stunden erforderlich sind, damit das Epoxidharz halbfest wird;
wobei das Bindemittel einen Elastizitätsmodul aufweist, der geringer als derjenige des Materials der Bodenplatte des Reaktorkörpers und des Materials der Basisplattform (4) ist; wobei die Bodenplatte des Reaktorkörpers aus Stahlmaterial gefertigt ist und die Basisplattform aus armiertem Beton gefertigt ist;
das Epoxidharz, das zwischen der Basisplattform (4) und der Bodenplatte des Reaktorkörpers eingefüllt ist, diese nach Verfestigung des Epoxidharzes vollständig aneinander klebt und die Basisplattform (4) mit der Bodenplatte des Reaktorkörpers integriert wird; und
wobei in Schritt 1) der Reaktorkörper, der auf der Basisplattform angeordnet ist, von einem Heber (3) angehoben wird; und in Schritt 4) die Bodenplatte des Reaktorkörpers zurück auf die Basisplattform (4) fällt, indem Druck von dem Heber (3) genommen wird.

2. Verfahren nach Anspruch 1, **dadurch gekennzeichnet, dass** in Schritt 2) der Ausrichtungsrahmen (2) bei einer bestimmten Breite von einer äußeren Rahmenlinie (1) der Bodenplatte des Reaktorkörpers angeordnet wird, der unter Verwendung der äußeren Rahmenlinie (1) als Referenz hergestellt wird.

3. Verfahren nach Anspruch 2, **dadurch gekennzeichnet, dass** sich die äußere Rahmenlinie (1) der Bodenplatte des Reaktorkörpers innerhalb des hergestellten Ausrichtungsrahmens (2) befindet und ein Abstand h zwischen der äußeren Rahmenlinie (1) der Bodenplatte des Reaktorkörpers und dem Ausrichtungsrahmen (2) im Bereich von 2 mm bis 8 mm liegt.

4. Verfahren nach Anspruch 1, **dadurch gekennzeichnet, dass** der Ausrichtungsrahmen (2) ein rechteckiger Holzrahmen ist und Rahmenstäbe des rechteckigen Rahmens eine Breite L im Bereich von 10 mm bis 15 mm und eine Höhe H im Bereich von 12 mm bis 18 mm aufweisen.

5. Verfahren nach Anspruch 1, **dadurch gekennzeichnet, dass** in Schritt 2) ein Kunststoffgewebe (8) unter dem Ausrichtungsrahmen (2) angeordnet wird und ein Teil des Kunststoffgewebes (8), der sich aus dem Ausrichtungsrahmen (2) heraus erstreckt, eine Länge im Bereich von 50 mm bis 100 mm aufweist; und auf Schritt 4) der folgende Schritt 5) folgt:
5) Säubern des Bindemittels, das aus dem Ausrichtungsrahmen (2) herausfließt, und Abschneiden des Kunststoffgewebes (8), das sich aus dem Ausrichtungsrahmen (2) heraus erstreckt.

6. Verfahren nach einem der Ansprüche 1 bis 5, **dadurch gekennzeichnet, dass** die Bodenplatte des Reaktorkörpers ein Boden eines Reaktorbehälters (10) ist, wobei geschlitzte Stahlelemente (12) am Boden des Reaktorbehälters (10) befestigt sind und die Verbindungsschicht (7) zwischen einer unteren Oberfläche der geschlitzten Stahlelemente (12) und der Basisplattform (4) bereitgestellt ist.

7. Vorrichtung, umfassend eine Bodenplatte eines Reaktorkörpers und eine Basisplattform (4), einen Ausrichtungsrahmen (2), der zwischen der Bodenplatte des Reaktors und der Basisplattform (4) angeordnet ist, wobei die Vorrichtung ferner eine Kontaktstruktur zwischen der Bodenplatte des Reaktorkörpers und der Basisplattform (4) umfasst, wobei die Kontaktstruktur eine Verbindungsschicht (7) umfasst, die zwischen der Bodenplatte des Reaktorkörpers und der Basisplattform (4) bereitgestellt ist, wobei die Verbindungsschicht (7) mit der Bodenplatte des Reaktorkörpers bzw. der Basisplattform (4) verbunden ist;
**dadurch gekennzeichnet, dass** die Verbindungsschicht (7) durch ein Bindemittel, ein Härtungsmittel und ein Fluid-Korn gebildet ist, die in den Ausrichtungsrahmen (2) eingefüllt sind, wobei das Bindemittel Epoxidharz ist und das Bindemittel einen Elastizitätsmodul aufweist, der geringer als derjenige des Materials der Bodenplatte des Reaktorkörpers und der Basisplattform (4) ist;
ein Gewichtsverhältnis des Epoxidharzes zu dem Härtungsmittel 5,4:1 beträgt;
die Basisplattform (4) und die Bodenplatte des Reaktorkörpers durch das Epoxidharz, das zwischen der Basisplattform (4) und der Bodenplatte des Reaktorkörpers eingefüllt ist, vollständig aneinander geklebt sind und die Basisplattform (4) mit der Bodenplatte des Reaktorkörpers einstückig ausgebildet ist.

8. Vorrichtung nach Anspruch 7, **dadurch gekennzeichnet, dass** die Bodenplatte des Reaktorkörpers ein Boden eines Reaktorbehälters (10) ist, geschlitzte Stahlelemente (12) am Boden des Reaktorbehälters (10) befestigt sind und die Verbindungsschicht (7) zwischen einer unteren Oberfläche der geschlitzten Stahlelemente (12) und der Basisplattform (4) bereitgestellt ist.

## Revendications

1. Procédé d'augmentation de la surface de contact entre un plateau inférieur d'un corps de réacteur et une plateforme (4), dont les étapes comprennent :
disposer une couche de liaison (7) entre le plateau inférieur du corps de réacteur et la plateforme (4), de sorte que la couche de liaison (7) soit liée à ceux-ci, où la disposition de la couche de liaison (7) entre le plateau inférieur du corps de réacteur et la plateforme (4) comprend les étapes suivantes :
1) lever le corps de réaction placé sur la plateforme (4) ;
2) préparer un cadre d'alignement (2) et le positionner entre le plateau inférieur du corps de réacteur et la plateforme (4) ;
3) disposer l'agent de liaison dans le cadre d'alignement (2) pour former une couche de liaison (7), où l'agent de liaison est une résine époxy, où un agent de durcissement est ajouté à la résine époxy, le rapport pondéral de la résine époxy à l'agent de durcissement étant de 5,4:1, on ajoute en outre, un sable fluide à la résine époxy, et
4) laisser tomber le plateau inférieur du corps de réacteur sur la plateforme (4) lorsque l'agent de liaison est en un état semi-solide, 4-6 heures étant requises pour que la résine époxy devienne semi-solide ;
où l'agent de liaison présente un module élastique inférieur à celui du matériau du plateau inférieur du corps de réacteur et du matériau de la plateforme (4) ; le plateau inférieur du corps de réacteur est composé d'acier, et la plateforme est composée de béton renforcé ;
la résine époxy disposée entre la plateforme (4) et le plateau inférieur du corps de réacteur adhère complètement à l'un et à l'autre après solidification de celle-ci, la plateforme (4) est intégrée au plateau inférieur du corps de réacteur, et
où à l'étape 1), le corps de réacteur placé sur la plateforme (4) est levé par un vérin (3), et à l'étape (4), le plateau inférieur du corps de réacteur retombe sur la plateforme (4) par libération de la pression du vérin (3).

2. Procédé selon la revendication 1, **caractérisé en ce qu'**à l'étape 2), le cadre d'alignement (2) est disposé à une certaine distance d'une ligne de cadre extérieur (1) du plateau inférieur du corps de réacteur, qui est préparé en prenant la ligne de cadre extérieur (1) comme référence.

3. Procédé selon la revendication 2, **caractérisé en ce que** la ligne de cadre extérieur (1) du plateau inférieur du corps de réacteur se trouve à l'intérieur du cadre d'alignement (2) préparé, et la distance h allant de la ligne de cadre extérieur (1) du plateau inférieur du corps de réacteur au cadre d'alignement (2) se situe dans l'intervalle allant de 2 mm à 8 mm.

4. Procédé selon la revendication 1, **caractérisé en ce que** le cadre d'alignement (2) est un cadre rectangulaire en bois, les montants du cadre rectangulaire ont une largeur L allant de 10 mm à 15 mm et une hauteur H allant de 12 mm à 18 mm.

5. Procédé selon la revendication 1, **caractérisé en ce qu'**à l'étape 2), un tissu plastique (8) est disposé sous le cadre d'alignement (2) et une partie du tissu plastique (8) sortant du cadre d'alignement (2) présente une longueur allant de 50 mm à 100 mm, l'étape 4) est suivie d'une étape 5) :
5) nettoyer l'agent de liaison ayant débordé du cadre d'alignement (2) et découper le tissu plastique (8) sortant du cadre d'alignement (2).

6. Procédé selon l'une quelconque des revendications 1 à 5, **caractérisé en ce que** le plateau inférieur du corps de réacteur est le fond d'un réservoir de réacteur (10), des cornières en acier (12) sont fixées au fond du réservoir (10), et la couche de liaison (7) est disposée entre la surface inférieure des cornières en acier (12) et la plateforme (4).

7. Appareil comprenant un plateau inférieur du corps de réacteur et une plateforme (4), un cadre d'alignement (2) placé entre le plateau inférieur du corps de réacteur et la plateforme (4), l'appareil comprenant en outre, une structure de contact entre le plateau inférieur du corps de réacteur et la plateforme (4), où la couche de liaison (7) est liée au plateau inférieur du corps de réacteur et à la plateforme (4), respectivement ; **caractérisé en ce que** la couche de liaison (7) est formée d'un agent de liaison, un agent de durcissement et un sable fluide, disposé dans le cadre d'alignement (2), où l'agent de liaison est une résine époxy, l'agent de liaison présente un module élastique inférieur à celui du matériau du plateau inférieur du corps de réacteur et du matériau de la plateforme (4) ; le rapport pondéral de la résine époxy à l'agent de durcissement étant de 5,4:1 ; la plateforme (4) et le plateau inférieur du corps de réacteur adhèrent complètement l'un à l'autre par la résine époxy disposée entre la plateforme (4) et le plateau inférieur du corps de réacteur, la plateforme (4) ne formant qu'un avec le plateau inférieur du corps de réacteur.

8. Appareil selon la revendication 7, **caractérisé en ce que** le plateau inférieur du corps de réacteur est le fond d'un réservoir de réacteur (10), des cornières en acier (12) sont fixées au fond du réservoir de réacteur (10) et la couche de liaison (7) est disposée entre la surface inférieure des cornières en acier (12) et la plateforme (4).
